# EUROPEAN PATENT APPLICATION

(11) **EP 4 851 437 A1**
(43) Date of publication of application: **09.12.2026**
(21) Application number: 26183564.9
(22) Date of filing: 08.06.2026
(51) Int. Cl.: F02C 3/30

(54) **SYSTEMS, METHODS, AND PROGRAM PRODUCTS FOR MITIGATING CONTRAILS USING ICE NUCLEI PARTICLES**

(30) Priority: 06.06.2025 US 202563818993 P
(71) Applicant: The Research Foundation for the State University of New York, Albany, New York 12201 (US)
(72) Inventor: YU, Fangqun, Albany, 12227 (US)
(74) Representative: Dennemeyer & Associates S.A.

(57) **Abstract**

Systems for mitigating contrails are disclosed. The systems include at least one dispersion component positioned adjacent to the aircraft engine. The dispersion component(s) is configured to release ice nuclei particles during operation. The system also includes a memory storing instructions, and at least one processor communicatively coupled to the dispersion component(s) and the memory. The processor(s) is configured to execute the instructions to determine: (a) ambient condition data relating to the aircraft engine, (b) operational characteristics for the aircraft engine, and (c) a fuel composition for a fuel utilized by the aircraft engine. The processor(s) is also configured to execute the instructions to adjust operational parameters of the dispersion component(s) to alter an amount of the ice nuclei particles released therefrom, and to mix the ice nuclei particles into an exhaust gas of the aircraft engine.

## Description

### CROSS-REFERENCE TO RELATED APPLICATION

This application claims the benefit of U.S. Provisional Patent Application No. 63/818,993, filed June 6, 2025, the entirety of which is hereby incorporated herein by this reference.

### BACKGROUND

The disclosure relates generally to aircraft engines, and more particularly, to systems, methods, and program products for mitigating contrails formed during operation of the aircraft engines using a small and optimized amount of ice nuclei particles.

Contrails, short for condensation trails, are the thin, cloud-like streaks that often form behind aircraft flying at high altitudes. These trails develop when hot, humid exhaust gases from jet engines mix with the extremely cold air in the upper atmosphere. Under the right temperature and humidity conditions, water vapor in the exhaust condenses on numerous combustion-generated particles and freezes into tiny ice crystals, creating visible white trails that can persist for minutes or even hours.

The formation and longevity of contrails depend largely on atmospheric conditions. In dry air, contrails may dissipate quickly, while in cold, moist air they can spread and evolve into larger cirrus-like cloud formations. These persistent contrails can cover extensive areas of the sky and may merge with naturally occurring clouds. As air traffic continues to increase globally, the frequency and coverage of persistent contrails have also grown, making them an increasingly important subject of climate research.

One of the primary environmental concerns associated with contrails is the formation of vast layers of frozen ice particles that can act like an insulating blanket in the atmosphere. These ice-crystal clouds can trap outgoing infrared radiation-heat that would otherwise escape from Earth into space-while still allowing much of the incoming sunlight (during daytime) to pass through. This process contributes to a warming effect known as radiative forcing, at a magnitude comparable to or larger than that due to aviation carbon dioxide emissions. Although contrails are short-lived compared with carbon dioxide emissions, their ability to retain heat in the atmosphere can enhance global warming and influence regional climate patterns, particularly in areas with heavy air traffic.

As such, there remains a need for systems or methods that can effectively mitigate contrails formed during operation of aircraft engines, and reduce their negative effects on the environment.

### BRIEF DESCRIPTION

A first aspect of the disclosure provides a system for mitigating contrails formed by an aircraft engine. The system includes: at least one dispersion component positioned adjacent to the aircraft engine, the at least one dispersion component configured to release ice nuclei particles; at least one memory storing instructions; and at least one processor communicatively coupled to the at least one dispersion component and the at least one memory, the at least one processor configured to execute the instructions to: determine: ambient condition data relating to the aircraft engine; operational characteristics for the aircraft engine; and a fuel composition for a fuel utilized by the aircraft engine; adjust operational parameters of the at least one dispersion component to alter an amount of the ice nuclei particles released therefrom; and mix the ice nuclei particles into an exhaust gas of the aircraft engine.

A second aspect of the disclosure provides a method for mitigating contrails formed by an aircraft engine. The method includes: providing at least one dispersion component positioned adjacent to the aircraft engine, the at least one dispersion component configured to release ice nuclei particles; determining: ambient condition data relating to the aircraft engine; operational characteristics for the aircraft engine; and a fuel composition for a fuel utilized by the aircraft engine; adjusting operational parameters of the at least one dispersion component to alter an amount of the ice nuclei particles released therefrom; and mixing the ice nuclei particles into an exhaust gas of the aircraft engine.

A third aspect of the disclosure provides a computer-readable storage medium with instructions stored thereon that, in response to execution by at least one processor, cause the at least one processor to: determine: ambient condition data relating to an aircraft engine forming contrails during operation; operational characteristics for the aircraft engine; and a fuel composition for a fuel utilized by the aircraft engine; adjust operational parameters of at least one dispersion component to alter an amount of ice nuclei particles released therefrom, wherein the at least one dispersion component is positioned adjacent to the aircraft engine; and mix the ice nuclei particles into an exhaust gas of the aircraft engine.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of a system for mitigating contrails using ice nuclei particles and a cross-sectional view of an aircraft engine, according to embodiments of the disclosure.
FIGS. 2A-2D show enlarged particle views of an exhaust gas and ice nuclei particles undergoing processes for mitigating contrails, according to embodiments of the disclosure.
FIGS. 3-8 show schematic views of a system for mitigating contrails using ice nuclei particles and cross-sectional views of aircraft engines, according to additional embodiments of the disclosure.
FIG. 9 shows a flow chart illustrating processes for mitigating the formation of contrails during operation of aircraft engines, according to embodiments of the disclosure.
FIG. 10 shows a schematic view of a computing system configured to mitigate the formation of contrails during operation of aircraft engines, according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION

As an initial matter, in order to clearly describe the current disclosure, it will become necessary to select certain terminology when referring to and describing relevant components within the disclosure. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

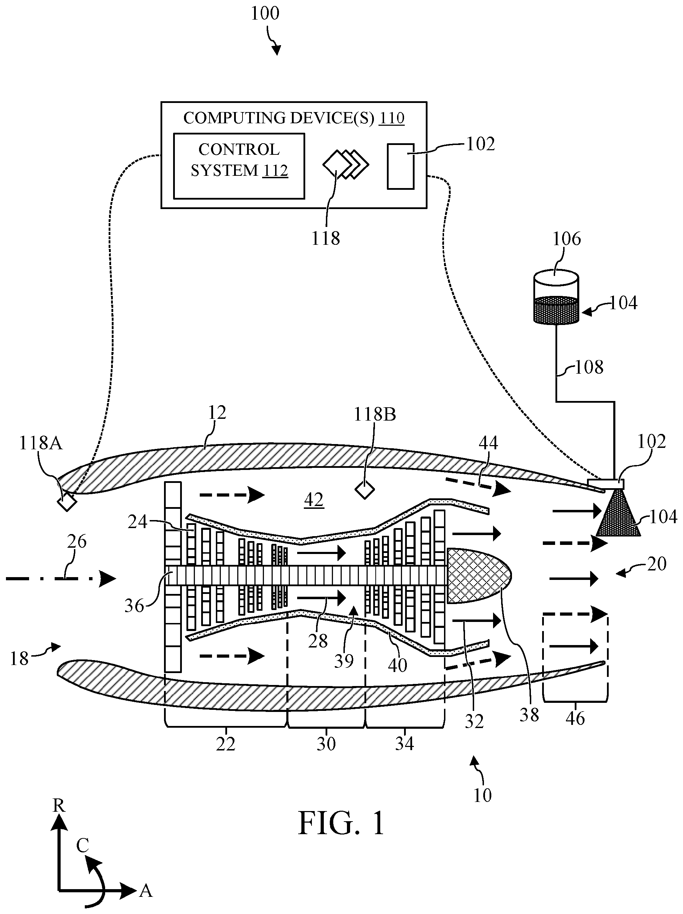

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbine engine or, for example, the flow of air through the combustor or coolant through one of the turbine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the engine, and "aft" referring to the rearward or turbine end of the engine. Additionally, the terms "leading" and "trailing" may be used and/or understood as being similar in description as the terms "forward" and "aft," respectively. It is often required to describe parts that are at differing radial, axial, and/or circumferential positions. The "A" axis represents an axial orientation. As used herein, the terms "axial" and/or "axially" refer to the relative position/direction of objects along axis A, which is substantially parallel with the axis of rotation of the turbine system (in particular, the rotor section). As further used herein, the terms "radial" and/or "radially" refer to the relative position/direction of objects along a direction "R" (see, FIG. 1), which is substantially perpendicular with axis A and intersects axis A at only one location. Finally, the term "circumferential" refers to movement or position around axis A (e.g., direction "C").

As discussed herein, the disclosure relates generally to aircraft engines, and more particularly, to systems, methods, and program products for mitigating contrails formed during operation of the aircraft engines using ice nuclei particles.

The disclosed technology mitigates contrails formed by aircraft engines during operation. More specifically, the systems, methods, and program products discussed herein are configured to mitigate, reduce, and/or eliminate the formation of contrails by injecting ice nuclei particles directly into an exhaust gas of the aircraft engine. Mixing and/or injecting the ice nuclei particles directly into the exhaust gas of the aircraft engine absorbs and/or consumes water vapor within the exhaust gas earlier. This in turn reduces and/or prevents water vapor from forming around more numerous particles (e.g., volatile, non-volatile) presented in the exhaust gas discharged from the aircraft engine during operation. Over time, the ice nuclei particles that absorb the water vapor grow, and fall from the atmosphere - eventually evaporating during the descent toward the earth. Absorbing the water vapor and/or preventing water vapor from encapsulating non-ice nuclei particles within the exhaust gas reduces and/or eliminates the formation of contrails. This ultimately reduces the warming effects and impact of modern aircraft engines and aircraft travel. For example, the warming effect of persistent contrails decreases significantly with the decreasing number of ice crystals formed in the initial exhaust plume. The disclosed technology presents an approach to mitigate contrail warming effect by reducing dramatically (e.g., up to one to two orders of magnitude) the number of ice crystals formed in the initial exhaust plume through seeding a small and optimized amount of ice nuclei particles that quickly consume water vapor in the aircraft exhaust.

These and other embodiments are discussed below with reference to FIGS. 1-10. However, those skilled in the art will readily appreciate that the detailed description given herein with respect to these figures is for explanatory purposes only and should not be construed as limiting.

FIG. 1 shows a contrail mitigation system 100 (hereafter, "system 100") in communication with at least one aircraft engine 10. More specifically, FIG. 1 shows a partial-schematic view of system 100 and a cross-sectional side view of aircraft engine 10. As shown, and as discussed herein, system 100 is in communication with and/or includes features that are coupled to portions of aircraft engine 10.

Aircraft engine 10 shown in FIG. 1 is formed as any suitable combustion engine included in an aircraft or plane, including, but not limited to, rich-burn engines, lean-burn engines, quick-mix engines, open-fan engines, and the like. Aircraft engine 10 includes an external shell 12 that defines an inlet 18 and an outlet 20 formed axially opposite inlet 18. External shell 12 encapsulates, surrounds, and/or houses various components and/or portions of aircraft engine 10. In exemplary embodiments, aircraft engine 10 includes a compressor section 22 including a plurality of stages of compressor blades 24 configured to compress an incoming flow of air 26 drawn into aircraft engine 10 via inlet 18. Compressor section 22 of aircraft engine 10 delivers a flow of compressed air 28 to a combustor or combustor section 30 (hereafter, "combustor 30") downstream of compressor section 22. Combustor 30 mixes the flow of compressed air 28 with a pressurized flow of fuel (not shown) and ignites the mixture to create a flow of combustion gases 32. Although only a single combustor 30 is shown, aircraft engine 10 may include any number of combustors 30.

The flow of combustion gases 32 is in turn delivered to a turbine section 34, which includes a plurality of stages of turbine blades, including airfoils and stator vanes. The flow of combustion gases 32 drives turbine section 34, and more specifically the plurality of turbine blades of turbine section 34, to produce mechanical work. The mechanical work produced in turbine section 34 drives compressor section 22 via a rotor 36 extending through turbine section 34. Combustion gases 32 pass through the last stage of airfoils and stator vanes of turbine section 34 and flow over a nozzle 38 positioned downstream of turbine section 34, and are ultimately directed out of and/or exhausted from aircraft engine 10 via outlet 20. A combustion gas path 39 is defined as a portion of aircraft engine 10 formed between compressor section 22 and turbine 34, and configured to receive air 26, and/or form combustion gases 32, as discussed herein.

As shown in FIG. 1, compressor section 22, combustor 30, turbine section 34, and at least a portion of nozzle 38 are positioned and/or disposed within an internal housing 40 of aircraft engine 10. More specifically, internal housing 40 is encapsulated within, surrounded by, and/or circumferentially disposed within external shell 12 of aircraft engine 10 to house the various combustion components (e.g., compressor section 22, combustor 30, turbine section 34) of aircraft engine 10. Internal housing 40 is also spaced apart from external shell 12 to form a bypass gas path 42 therebetween. During operation, the incoming flow of air 26 entering inlet 18, as defined by external shell 12, flows into compressor section 22 and is processed as discussed herein, or flows into bypass gas path 42. The portion of air 26 flowing into bypass gas path 42 forms bypass gas 44 that flows downstream, between external shell 12 and internal housing 40 and/or through bypass gas path 42 toward outlet 20 of aircraft engine 10. Prior to, or immediately preceding, being expelled from outlet 20 of aircraft engine 10, bypass gas 44 mixes with combustion gases 32 to form exhaust gas or exhaust gases 46 (hereafter, "exhaust gas 46"). That is, exhaust gas 46 expelled, exhausted, and/or exiting aircraft engine 10 via outlet 20 is formed, at least in part, from a mixture of combustion gases 32 flowing downstream from turbine section 34 and bypass gas 44 flowing downstream through bypass gas path 42, respectively.

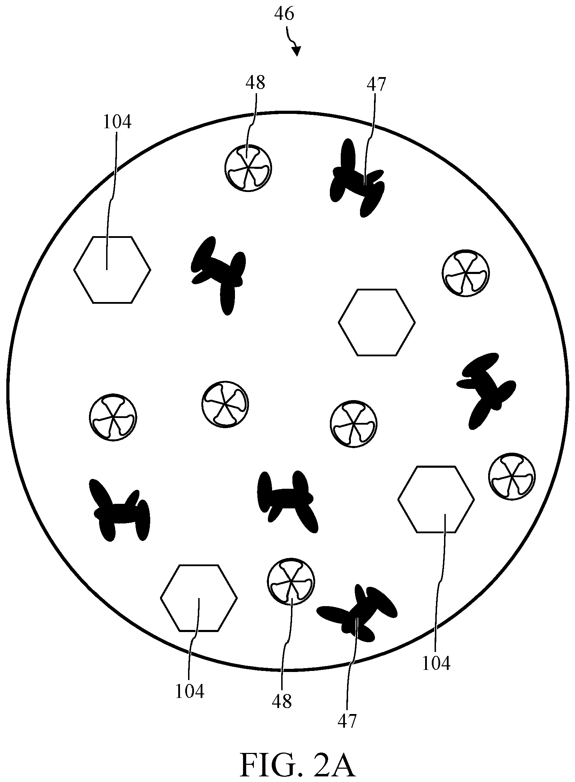

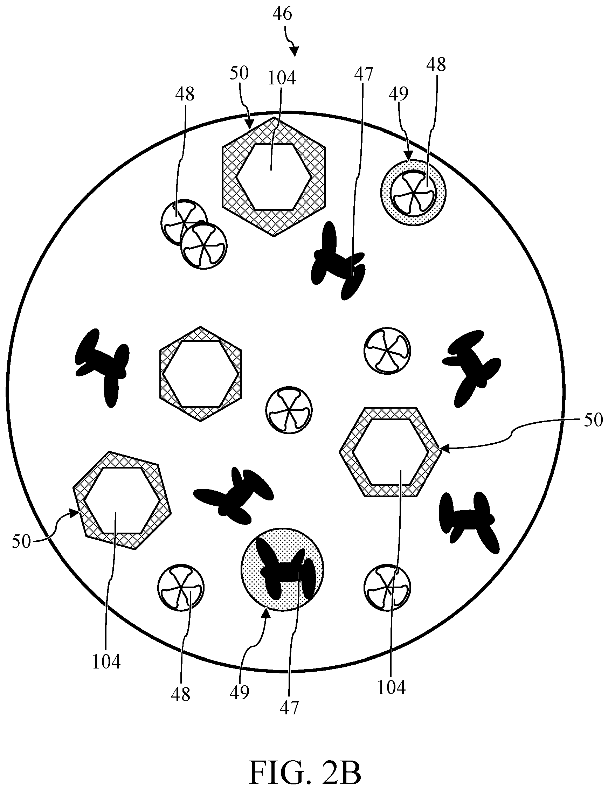

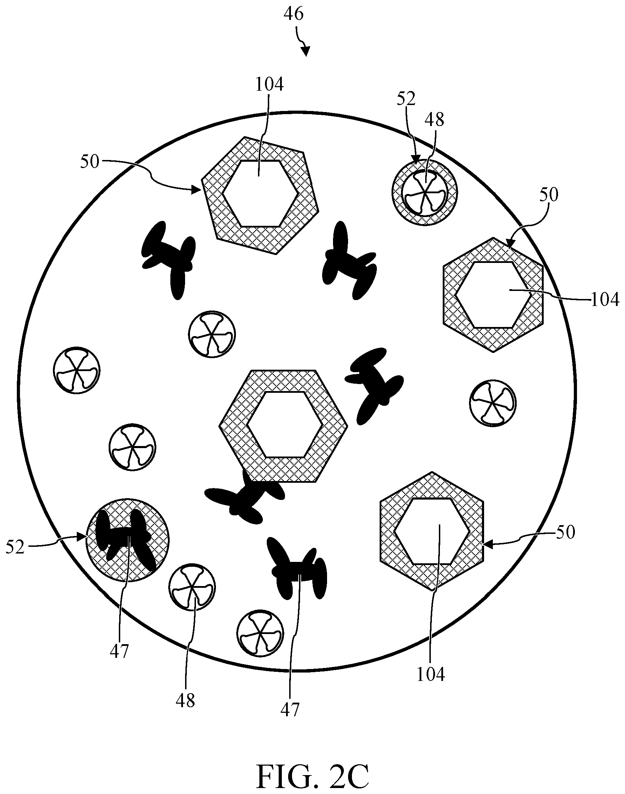

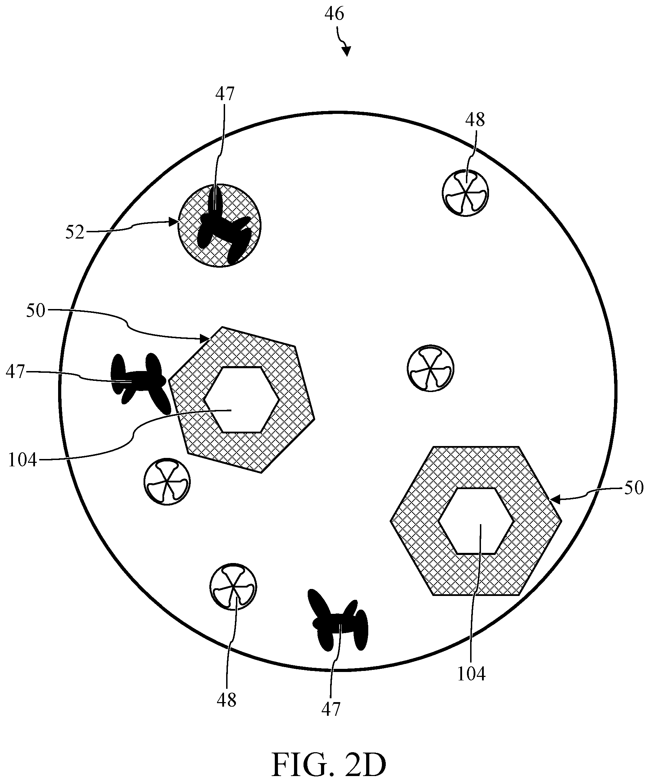

Exhaust gas 46 exhausted from aircraft engine 10 contains a plurality of particles, chemical species, and/or materials. For example, exhaust gas 46 that is released into the atmosphere during operation of engine 10 contains a plurality of non-volatile and volatile particles (see, FIG. 2). In exemplary embodiments, the volatile particles that form shortly after emission, as the exhaust gas 46 cools down, from precursor gas species include, but are not limited to, sulfuric acid, low-volatile organics from incomplete fuel combustion, and engine lubricant oil. The non-volatile particles are dominated by, but are not limited to, soot or black carbon particles formed inside combustor 30. During conventional operations of aircraft engine 10 (e.g., no use of system 100), portions of the volatile and non-volatile particles included in the downstream of exhaust gas 46 absorb water vapor and form water droplets as the exhaust cools down and reaches water vapor supersaturation. As time passes, and based on ambient conditions (e.g., temperature) surrounding aircraft engine 10, the water droplets formed on volatile and non-volatile particles included in exhaust gas 46 freeze and/or form as ice crystals, which undesirably remain in the atmosphere, as discussed herein.

Although a single aircraft engine 10 is shown in FIG. 1, it is understood that a plane (not shown) utilizing system 100 can include any number of aircraft engines 10. As such, it is also to be understood that system 100 discussed herein is utilized to mitigate contrails for each and every aircraft engine 10 included on the plane utilizing system 100.

As shown in FIG. 1, system 100 is in communication with and/or includes features that are coupled to portions of aircraft engine 10 to mitigate, reduce, and/or eliminate the formation of contrails during operation of aircraft engine 10. In exemplary embodiments, system 100 includes at least one dispersion component 102 positioned adjacent to aircraft engine 10. More specifically, and as shown in the non-limiting example of FIG. 1, a single dispersion component 102 is coupled to, positioned on, and/or affixed to external shell 12 of aircraft engine 10. Additionally, as shown, dispersion component 102 is positioned on external shell 12 directly adjacent to outlet 20 of aircraft engine 10. Dispersion component 102 is formed from any suitable device, component, and/or assembly configured to release ice nuclei particles 104 to facilitate the mitigation of contrails generated by exhaust gas 46 and/or aircraft engine 10. In a non-limiting example, dispersion component 102 is formed as an atomizer configured to spray, release, and/or disperse ice nuclei particles 104 in a solid form (e.g., nanopowder) or, alternatively, a liquid form, as discussed herein. In another non-limiting example, dispersion component 102 is formed as a combustion chamber or assembly configured to burn, ignite, and/or combust ice nuclei particles 104 prior to injection and/or mixing with exhaust gas 46.

In exemplary embodiments, system 100 also includes a storage component 106 in communication with dispersion component 102. More specifically, storage component 106 is in flow communication and/or fluidly coupled to dispersion component 102, and is configured to store ice nuclei particles 104, as well as provide ice nuclei particles 104 to dispersion component 102 during operation of system 100 and aircraft engine 10, respectively. Storage component 106 is positioned on and/or with the aircraft (not shown) including aircraft engine 10 and utilizing system 100 to mitigate contrails, as discussed herein. For example, storage component 106 is positioned within a cabin, cargo area, or hull of the aircraft, and is in flow communication with dispersion component 102 via at least one conduit 108. In other non-limiting examples, storage component 106 is coupled to a wing (not shown) adjacent to aircraft engine 10 or alternatively is coupled directly to external shell 12 of aircraft engine 10.

As discussed herein, ice nuclei particles 104 are dispensed, dispersed, and/or sprayed from dispersion component 102 and are subsequently mixed with exhaust gas 46 to facilitate the mitigation, reduction, and/or elimination of contrail formation during the operation of aircraft engine 10. Ice nuclei particles 104 stored in storage component 106 and sprayed by dispersion component 102 of system 100 are formed from any suitable particle and/or material composition that is configured to absorb and/or consume water vapor from exhaust gas 46 generated during operation. Additionally, or alternatively, ice nuclei particles 104 are formed from any suitable particle and/or material composition configured to absorb and/or consume water vapor within exhaust gas 46 exhausted from aircraft engine 10. In exemplary embodiments, ice nuclei particles 104 absorb and/or consume water vapor starting between approximately -5°C and approximately -10°C, and/or are configured to freeze heterogeneously and absorb or consume water vapor starting between approximately -5°C and approximately -10°C. Ice nuclei particles 104 shown in FIG. 1 are formed from a material composition including, but not limited to, silver iodide (AgI), bismuth triiodide (BiI₃), mineral dust, ice-active proteins (e.g., Snomax, purified InaZ), and the like.

During operation, the size of ice nuclei particles 104 dispensed, dispersed, and/or sprayed from dispersion component 102 includes a particle size between approximately 50 nanometers (nm) and approximately 200 nm. The size of ice nuclei particles 104 utilized by system 100 during operation of aircraft engine 10 is dependent, at least in part, on the state of material forming ice nuclei particles 104 (e.g., liquid, solid), flow capabilities of dispersion component 102, operational parameters of dispersion component 102, determined ambient condition data relating to aircraft engine 10, operational characteristics for aircraft engine 10, fuel composition for the fuel used by aircraft engine 10, and any other suitable characteristics, properties, and/or data. In exemplary embodiments where dispersion component 102 is formed as an atomizer and ice nuclei particles 104 are stored in storage component 106 in a liquid state, the atomizer can include additional components and/or features (e.g., mesh screen, nozzle configuration) that determine and/or adjust the size of ice nuclei particles 104 injected and/or mixed with exhaust gas 46 during operation. In the example embodiment, nanoparticles or nanopowders of ice nuclei particles 104 are mixed with and/or dissolved in a solvent (e.g., water, ethanol, benzene, toluene, xylene, etc.). During operation of system 100, the atomizer (e.g., dispersion component 102) generates and/or disperses liquid droplets of ice nuclei particles 104 that remain in a liquid state or are subsequently dried by exhaust gas 46 to form solid-state ice nuclei particles 104, as discussed herein.

In another non-limiting example, where dispersion component 102 is formed as a combustion chamber, liquid-state ice nuclei particles 104 are stored in storage component 106 and provided to the combustion chamber during operation of system 100. Liquid-state ice nuclei particles 104 are heated, combusted, and/or burned in the combustion chamber and subsequently dispensed, dispersed, and/or sprayed from the chamber (e.g., dispersion component 102) and mixed with exhaust gas 46 to facilitate the mitigation of contrails formed during operation by aircraft engine 10, as discussed herein.

In additional non-limiting examples, ice nuclei particles 104 are stored in storage component 106 in a solid state (e.g., nanoparticle, nanopowder). In the example, dispersion component 102 is formed from any suitable component, device, and/or assembly that is configured to dispense, disperse, and/or spray the solid-state ice nuclei particles 104 from dispersion component 102, as similarly discussed herein.

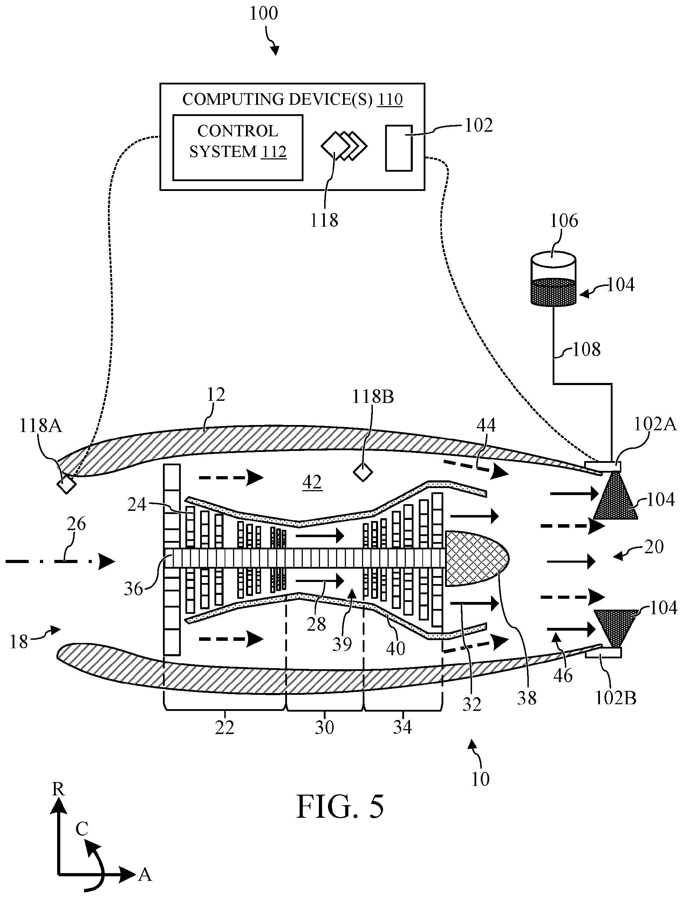

Although shown and discussed herein as only including a single dispersion component 102, it is understood that system 100 can include any number of dispersion components 102. For example, system 100 can include a plurality of dispersion components 102, where at least one of the plurality of dispersion components 102 is coupled to and/or positioned adjacent to each of the aircraft engines 10 included in the plane utilizing system 100 for contrail mitigation. Additionally, or alternatively, and as discussed herein (see, FIGS. 5-8), two or more dispersion components 102 can be coupled to and/or positioned adjacent to a single aircraft engine 10 of the plane (not shown) utilizing system 100 for contrail mitigation, as similarly discussed herein.

As shown in FIG. 1, system 100 also includes at least one computing device 110 configured to control the operation of dispersion component 102. Computing device(s) 110 can be hard-wired and/or wirelessly connected to and/or in communication with dispersion component 102 via any suitable electronic and/or mechanical communication component or technique. Computing device(s) 110, and its various components discussed herein, are a single stand-alone system that functions separate from another control system and/or computing device (not shown) that controls and/or adjusts operations and/or functions of aircraft engine 10, and its various components (e.g., compressor section 22, combustor section 30, turbine section 34, and so on). Alternatively, computing device(s) 110 and its components may be integrally formed within, in communication with, and/or formed as a part of a larger control system (e.g., computing device) (not shown) that controls and/or adjusts operations and/or functions of aircraft engine 10, and its various components discussed herein.

In various embodiments, computing device(s) 110 includes a control system 112 and one or more sensors 118, as described herein, for controlling operations of dispersion component 102. As discussed herein, control system 112 controls the operation of dispersion component 102, to mitigate, reduce, and/or eliminate the formation of contrails during operation of aircraft engine 10. For example, and as discussed herein, control system 112 utilizes data and/or characteristics relating to aircraft engine 10 and ambient conditions surrounding aircraft engine 10, as determined, at least in part, by sensor(s) 118 to control and/or adjust the operation of dispersion component 102. Additionally, as discussed herein, adjusting the operation of dispersion component 102 determines an optimum, desired, and/or advantageous amount of ice nuclei particles 104 that are mixed into exhaust gas 46, and in turn, facilitates the mitigation of contrails formed by aircraft engine 10 during operation.

As shown in FIG. 1, computing device(s) 110 are in electrical and/or mechanical communication with sensor(s) 118 of system 100. At least one sensor 118 of and/or connected to computing device(s) 110 is positioned on the plane including aircraft engine 10. In an exemplary embodiment, a first sensor 118A is positioned on external shell 12, adjacent to inlet 18, and a second sensor 118B is positioned substantially within bypass gas path 42 and/or positioned between internal housing 40 and external shell 12 of aircraft engine 10. Sensor(s) 118 in communication with computing device(s) 110 of system 100 are formed as any suitable sensor or device configured to detect, perceive, and/or determine data, information, and/or operational characteristics relating to and/or influencing the operation of aircraft engine 10. For example, and as discussed herein, sensor(s) 118 of system 100 are formed as any suitable sensor configured to detect and/or determine ambient condition data relating to aircraft engine 10 and/or operational characteristics for aircraft engine. In non-limiting examples, ambient condition data includes, but is not limited to, an ambient temperature of air 26 surrounding aircraft engine 10, an ambient pressure of air 26 surrounding aircraft engine 10, an ambient humidity of air 26 surrounding aircraft engine 10, an altitude of aircraft engine 10, and/or any other ambient, environment, and/or atmospheric condition data that affects the operation of aircraft engine 10. Additionally in non-limiting examples, operational characteristics for aircraft engine 10 include, but are not limited to, an operational power setting and combustion temperature of aircraft engine 10, a temperature of exhaust gas 46, a flow rate of exhaust gas 46, a consumption rate of fuel, a pressure of exhaust gas 46, and/or any other operational characteristics that affect the operation of aircraft engine 10. In non-limiting examples, sensor(s) 118 may be configured as, but not limited to, thermometers, thermistors, thermocouples, pressure sensors, humidity sensors, thermal conductivity sensors, and/or any other mechanical/electrical sensor. For those ambient and engine operational data mentioned above that are already measured or available from aircraft system (not shown), no additional sensors for these are needed and this data can be passed to computing device(s) 110 through hard-wired and/or wireless connection. As discussed herein, computing device(s) 110 utilizes determined ambient condition data and operational characteristics for aircraft engine 10, as well as, a predetermined fuel composition for fuel used by aircraft engine 10, to adjust operational parameters of dispersion component 102 to facilitate the mitigation of contrails formed by aircraft engine 10 during operation.

Although two sensors 118 are shown, it is understood that system 100 can include more or less sensor(s) 118 that are configured to provide computing device(s) 110, and specifically control system 112, with information or data relating to the ambient condition data, operational characteristics, and/or fuel composition data, as discussed herein. The number of sensors 118 shown in FIG. 1 is illustrative and exemplary. As such, in other exemplary embodiments, system 100 can include more or less sensors 118 than what is depicted in the Figures.

As discussed herein, system 100 is utilized to mitigate, reduce, and/or eliminate contrails formed by aircraft engine 10 using ice nuclei particles 104. More specifically, computing device(s) 110, and more particularly control system 112, adjust operational parameters of the at least one dispersion component 102 to adjust and/or alter an amount of ice nuclei particles 104 released into exhaust gas 46 for mitigating the contrails. In exemplary embodiments, computing device(s) 110 and/or control system 112 receive data and information determined, detected, and/or collected from sensors 118. As discussed herein, the data and information sensed by sensors 118 include ambient condition data relating to aircraft engine 10, and operational characteristics for the aircraft engine 10. In addition to the ambient condition data and operational characteristics sensed and/or determined by sensors 118, computing device(s) 110 and/or control system 112 utilize a fuel composition for a fuel utilized by aircraft engine 10 during operation, as well as the engine lubricant oil consumption rate and venting position. The fuel composition is predetermined and/or dependent, at least in part, on the type of engine forming aircraft engine 10. In exemplary embodiments, the fuel composition for the fuel used in aircraft engine 10 includes, but is not limited to, jet-A fuel, SAF fuel, hydrogen fuel, or a mix of different fuels, and the like. Other additional characteristics relating to the fuel composition that are considered by computing device(s) 110 and/or control system 112 during operation include, but are not limited to, fuel sulfur content, aromatics, hydrogen content, and other similar characteristics.

Utilizing the determined data, information, and/or characteristics relating to aircraft engine 10, computing device(s) 110 and/or control system 112 adjust operational parameters of the at least one dispersion component 102 to alter an amount of ice nuclei particles 104 released from dispersion component 102. That is, and based on the sensed and/or determined ambient condition data, operational characteristics, and/or fuel composition, control system 112 is configured to adjust operational parameters of dispersion component 102 to alter (e.g., increase, decrease) the amount of ice nuclei particles 104 dispensed, dispersed, and/or sprayed by dispersion component 102. Additionally, or alternatively, adjusting the operational parameters of dispersion component 102 adjusts and/or alters the flow rate of ice nuclei particles 104 being sprayed by dispersion component 102 during operation of aircraft engine 10. In exemplary embodiments, computing device(s) 110 and/or control system 112 adjust the operational parameters of dispersion component 102 to be within a calculated optimum range that ensures the introduction of ice nuclei particles 104 into exhaust gas 46 mitigates, reduces, and/or eliminates contrails. That is, and based on the determined ambient condition data, operational characteristics, and/or fuel composition, computing device(s) 110 and/or control system 112 are configured to determine, calculate, and/or define an optimum range, amount, and/or flow rate of ice nuclei particles 104 to be mixed into exhaust gas 46 to facilitate the mitigation of contrails from engine 10. Using the defined range, control system 112 adjusts the operational parameters of dispersion component 102 to ensure the amount and/or flow rate of ice nuclei particles 104 meets (or exceeds) the defined optimum range.

In the exemplary embodiments, and subsequent to the dispensing, dispersion, and/or spraying of ice nuclei particles 104, the ice nuclei particles 104 are mixed into an exhaust gas 46 of aircraft engine 10. More specifically, and dependent upon the position of dispersion component 102 within aircraft engine 10, ice nuclei particles 104 dispensed from dispersion component 102 are injected, mixed, and/or introduced into exhaust gas 46 generated in engine 10. As shown in FIG. 1, where dispersion component 102 is coupled to external shell 12 of engine 10, adjacent outlet 20, mixing ice nuclei particles 104 includes injecting ice nuclei particles 104 directly into exhaust gas 46, downstream of combustion gas path 39 and bypass gas path 42, respectively. As discussed herein, exhaust gas 46 is formed from a mixture of combustion gases 32 and the bypass gas 44. As discussed herein, the inclusion, injection, and/or mixing of ice nuclei particles 104 into exhaust gas 46 mitigates, reduces, and/or eliminates the formation of contrails during the operation of aircraft engine 10.

FIGS. 2A-2D show various enlarged, particle views of exhaust gas 46 and ice nuclei particles 104 downstream of the outlet 20. More specifically, FIGS. 2A-2D show an enlarged particle view of the mixture of exhaust gas 46 and ice nuclei particles 104, subsequent to system 100 utilizing dispersion component 102 to inject ice nuclei particles 104 into exhaust gas 46 during operation of engine 10. Additionally, each of FIGS. 2A-2D shows the mixture of exhaust gas 46 and ice nuclei particles 104 at different exhaust plume ages (e.g., distinct, successive times post exhaust) of operation of engine 10 and system 100. It is understood that similarly numbered and/or named components may function in a substantially similar fashion. Redundant explanation of these components has been omitted for brevity.

FIG. 2A shows a mixture of exhaust gas 46 and ice nuclei particles 104 after the mixing, injection, and/or dispersion of ice nuclei particles 104 into exhaust gas 46. For example, FIG. 2A depicts the mixture of exhaust gas 46 and ice nuclei particles 104 within approximately zero (0) seconds to approximately 0.1 seconds after dispersion component 102 injects ice nuclei particles 104 into exhaust gas 46 as exhaust gas leaves outlet 20. As such, the enlarged particle view shown in FIG. 2A also depicts the mixture of exhaust gas 46 and ice nuclei particles 104 after exiting, ejecting, and/or exhausting from outlet 20 of aircraft engine 10. As shown in the exemplary embodiment, and as discussed herein, exhaust gas 46 contains a plurality of particles, including but not limited to, non-volatile soot particles 47 and volatile particles 48 formed from precursor gases as exhaust gas 46 is exhausted downstream of outlet 20 and cools down by further mixing. Additionally, as shown in FIG. 2A, an optimized, desired, and/or calculated amount, but much less (in terms of number concentrations when compared to the number concentration of other particles 47, 48 in exhaust gas 46), of ice nuclei particles 104 are also mixed in with particles of exhaust gas 46. In the exemplary embodiment, the optimized, desired, and/or calculated amount or number of ice nuclei particles 104 mixed into exhaust gas 46 is less than the total number of non-volatile soot particles 47 and volatile particles 48 in exhaust gas 46.

FIG. 2B depicts activation of a small fraction of non-volatile soot particles 47 and volatile particles 48 into water droplets 49. Additionally, FIG. 2B depicts the formation of ice crystals 50 on ice nuclei particles 104 in the mixture of exhaust gas 46 and ice nuclei particles 104 within approximately 0.1 seconds to approximately 0.3 seconds after dispersion component 102 injects ice nuclei particles 104 into exhaust gas 46 and exhaust gas 46 leaves outlet 20. Additionally, the enlarged particle view shown in FIG. 2B also depicts the mixture of exhaust gas 46 and ice nuclei particles 104 at a distance further downstream of outlet 20 and/or away from aircraft engine 10 during operation. As shown in the exemplary embodiment, ice nuclei particles 104 increase in size when compared to the initial mixing and/or injection (see e.g., FIG. 2A). In non-limiting examples, ice nuclei particles 104 grow in size as a result of ice nuclei particles 104 consuming, absorbing, and/or attracting water vapor present in exhaust gas 46 (not shown). As discussed herein, ice nuclei particles 104 are formed from a predetermined material that is configured to start to consume and/or absorb the water vapor starting at a temperature of between approximately -5°C and approximately -10°C. Because of ice nuclei particles 104 absorbing and/or consuming water vapor at temperatures higher than, and relative humidity lower than, required for the combustion-generated particles (e.g., volatile, non-volatile) of exhaust gas 46 to form cloud droplets or ice crystals, ice nuclei particles 104 consume a substantial fraction of the water vapor present in exhaust gas 46, reduce maximum relative humidity in exhaust gas 46, and/or minimize the fraction of non-volatile soot particles 47 and volatile particles 48 activated into water droplets 49 that requires high relative humidity or water vapor supersaturation ratio in exhaust gas 46. As a result, compared to the conventional scenarios that do not include seeding of ice nuclei particles 104, the total number of water droplets 49 and ice crystals 50 formed at this stage is reduced by up to one to two orders of magnitude.

FIG. 2C depicts the freezing of water droplets 49 (see, FIG. 2B) activated on a small fraction of non-volatile soot particles 47 and volatile particles 48 to form ice crystals 52 thereon and/or thereover. Furthermore, FIG. 2C depicts the growth of ice crystals 50 formed on ice nuclei particles 104 in the mixture of exhaust gas 46 and ice nuclei particles 104 within approximately 0.3 seconds to approximately 1.0 second after dispersion component 102 injects ice nuclei particles 104 into exhaust gas 46 and exhaust gas 46 leaves outlet 20. As shown in the exemplary embodiment, ice crystals 50 formed around ice nuclei particles 104 (FIG. 2B) grow and/or increase in size. More specifically, and subsequent to initial consuming, absorbing, and/or attracting water vapor (see FIG. 2B), the water vapor is further consumed and absorbed by ice nuclei particles 104 to grow ice crystals 50 in size and/or dimension.

FIG. 2D depicts the mixture of exhaust gas 46 and ice nuclei particles 104 greater than approximately 1.0 second after dispersion component 102 injects ice nuclei particles 104 into exhaust gas 46. In the exemplary embodiment, and after additional passage of time when compared to FIG. 2C, ice crystals 50 formed around ice nuclei particles 104 and ice crystals 52 formed around a small fraction of non-volatile soot particles 47 and volatile particles 48 continue to grow in size. More specifically, the consumed, absorbed, and/or attracted water vapor continues to freeze and/or increases the size of ice crystals 50, 52, respectively. As time continues, ice nuclei particles 104 including ice crystals 50, 52 eventually grow to a size and/or weight that is too large to remain suspended in the air. As such, ice crystals 50, 52 begin to fall toward the earth. As ice crystals 50, 52 fall into warmer air, they evaporate. Compared to conventional scenarios or operations without seeding of ice nuclei particles 104, ice crystals 50, 52 formed with seeding of an optimized, desired, and/or calculated, small amount of ice nuclei particles 104 are much lower in number concentrations and larger in sizes, and thus fall to the earth faster and/or more quickly. As a result, ice crystals 50, 52 are suspended in the air for a much shorter period of time, and therefore create less and/or a thinner blanketing effect typically associated with contrails with more numerous but smaller ice crystals formed on particles 47, 48 of exhaust gas 46. As such, by consuming the water vapor shortly after emission and eventually falling and evaporating, an optimized number of seeded ice nuclei particles 104 prevent most of combustion-generated particles 47, 48 of exhaust gas 46 from activation into droplets 49, freezing into ice crystals 52, and ultimately creating the undesirable blanket effect associated with contrails generated by engine 10.

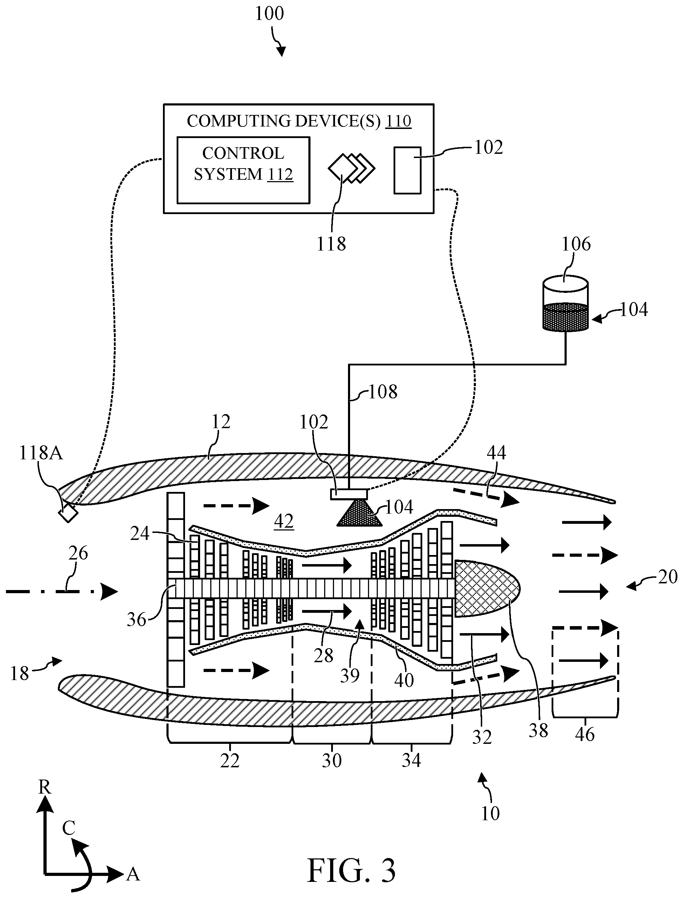

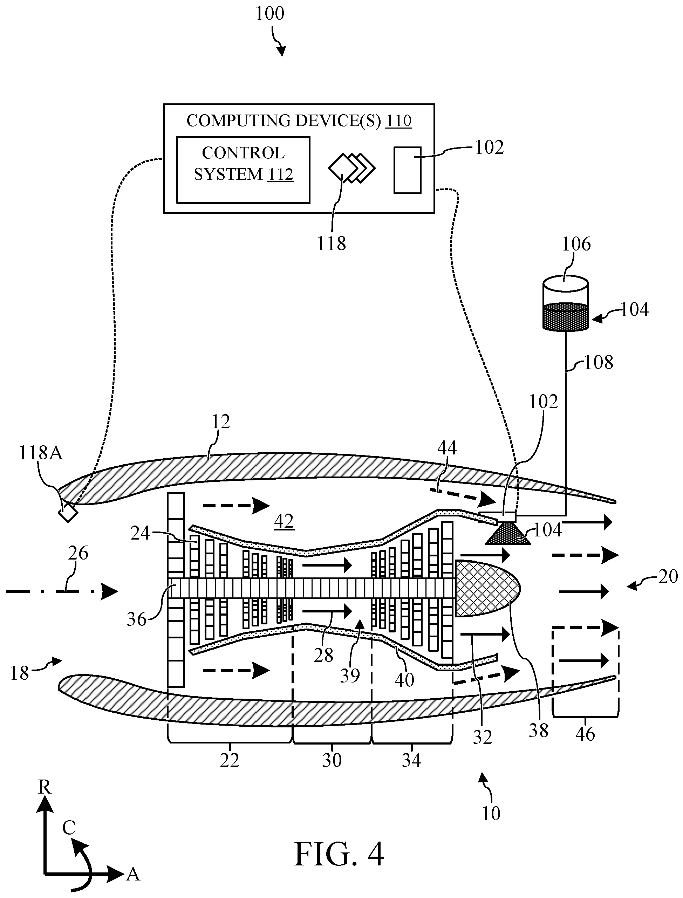

FIGS. 3 and 4 show system 100 in communication with at least one aircraft engine 10. More specifically, FIGS. 3 and 4 show partial-schematic views of system 100 including a single dispersion component 102, and a cross-sectional side view of aircraft engine 10. It is understood that similarly numbered and/or named components may function in a substantially similar fashion. Redundant explanation of these components has been omitted for brevity.

As shown in FIG. 3, system 100 includes dispersion component 102 positioned adjacent to and/or within aircraft engine 10. More specifically, and as shown in the non-limiting example, single dispersion component 102 is coupled to, affixed within, and/or positioned between internal housing 40 and external shell 12 of aircraft engine 10. Additionally, as shown, dispersion component 102 is positioned within bypass gas path 42 defined between internal housing 40 and external shell 12. Furthermore, dispersion component 102 is positioned within engine 10, upstream of outlet 20 defined by external shell 12. In the exemplary embodiment, and as a result of the position of dispersion component 102 within aircraft engine 10, when dispersion component 102 dispenses, disperses, and/or sprays ice nuclei particles 104 during operation, ice nuclei particles 104 are mixed with bypass gas 44 flowing through bypass gas path 42. That is, dispersing and/or mixing ice nuclei particles 104 includes injecting ice nuclei particles 104 into bypass gas path 44 formed separated from and surrounding compressor section 22 and turbine section 34 of aircraft engine 10. In turn, ice nuclei particles 104 are mixed with bypass gas 44 within bypass gas path 42, prior to both bypass gas 44 and ice nuclei particles 104 flowing downstream and mixing with combustion gases 32 to form exhaust gas 46, as discussed herein.

In the non-limiting example shown in FIG. 4, system 100 includes dispersion component 102 positioned adjacent to nozzle 38 of aircraft engine 10. More specifically, and as shown in FIG. 4, single dispersion component 102 is coupled to, affixed to, and/or positioned directly on internal housing 40, directly adjacent to nozzle 38 and downstream of turbine section 34 of engine 10. As a result of the position of dispersion component 102 within aircraft engine 10, when dispersion component 102 dispenses, disperses, and/or sprays ice nuclei particles 104 during operation, ice nuclei particles 104 are mixed with combustion gases 32 flowing through combustion gas path 39 and/or exiting turbine section 34. In turn, and in the exemplary embodiment, dispersing and/or mixing ice nuclei particles 104 includes injecting ice nuclei particles 104 into combustion gas path 39 formed directly downstream of the last stage of turbine section 34 of aircraft engine 10. Ice nuclei particles 104, as shown in FIG. 4, are mixed with combustion gases 32 adjacent to nozzle 38, and prior to both combustion gases 32 and ice nuclei particles 104 flowing downstream and mixing with bypass gas 44 to form exhaust gas 46, as discussed herein.

FIGS. 5-8 show system 100 in communication with at least one aircraft engine 10. More specifically, FIGS. 5-8 show partial-schematic views of system 100 including a plurality of dispersion components 102, and a cross-sectional side view of aircraft engine 10. It is understood that similarly numbered and/or named components may function in a substantially similar fashion. Redundant explanation of these components has been omitted for brevity.

As shown in FIG. 5, system 100 includes a plurality of dispersion components 102 in communication with aircraft engine 10. In the exemplary embodiment, a first dispersion component 102A is coupled to, positioned on, and/or affixed to external shell 12 of engine 10, as similarly shown and discussed herein with respect to FIG. 1. Additionally, system 100 includes a second, distinct dispersion component 102B also in communication with aircraft engine 10. In the non-limiting example shown in FIG. 5, second dispersion component 102B is coupled to, positioned on, and/or affixed to external shell 12 of aircraft engine 10, directly adjacent to outlet 20 of aircraft engine 10. Second dispersion component 102B is also positioned on external shell 12 radially opposite and/or radially aligned with first dispersion component 102A. During operation of system 100 and aircraft engine 10, both dispersion components 102A, 102B are configured to disperse, dispense, and/or spray ice nuclei particles 104 to be mixed with exhaust gas 46 and facilitate the mitigation of contrail formation, as similarly discussed herein.

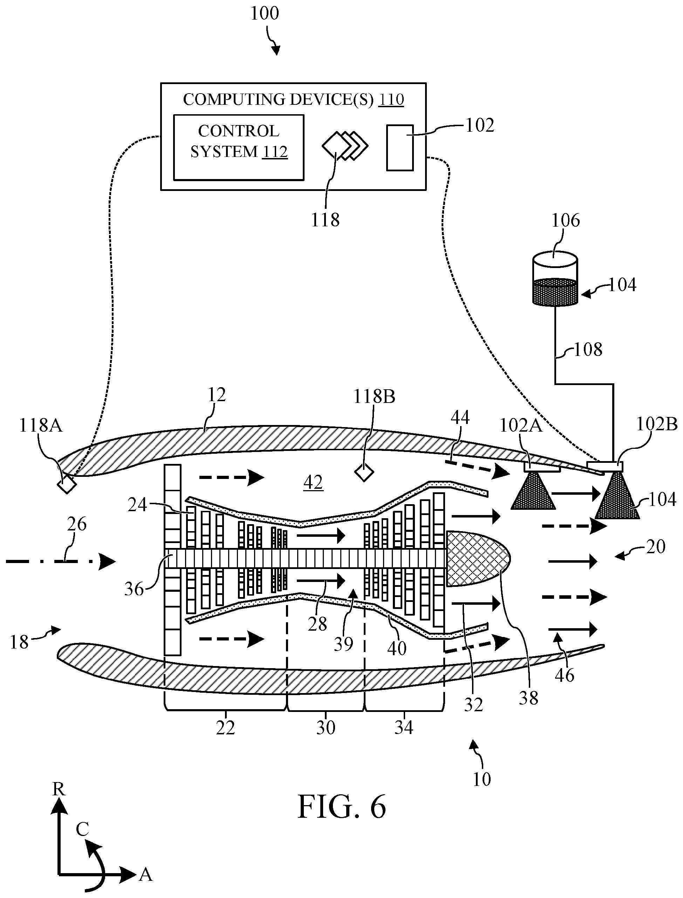

In the non-limiting example shown in FIG. 6, system 100 includes a plurality of dispersion components 102A, 102B in communication with aircraft engine 10. In the exemplary embodiment, first dispersion component 102A is coupled to, positioned on, and/or affixed to external shell 12 of engine 10. Additionally, second dispersion component 102B is coupled to, positioned on, and/or affixed to external shell 12 of aircraft engine 10, directly adjacent to outlet 20 of aircraft engine 10. As shown in the exemplary embodiment, second dispersion component 102B is also positioned on external shell 12 adjacent to and downstream from first dispersion component 102A. That is, first dispersion component 102A and second dispersion component 102B are axially aligned within aircraft engine 10 and/or formed in series to one another, where both dispersion components 102A, 102B are coupled to external shell 12 upstream of outlet 20, and first dispersion component 102A is positioned upstream of second dispersion component 102B. In additional non-limiting examples (not shown), first dispersion component 102A and second dispersion component 102B are not axially aligned, but may be circumferentially offset with respect to one another. As shown, first dispersion component 102A is positioned within aircraft engine 10 to mix sprayed ice nuclei particles 104 with bypass gas 44, while second dispersion component 102B is positioned to mix sprayed ice nuclei particles 104 with exhaust gas 46, formed from bypass gas 44, combustion gases 32, and possibly ice nuclei particles 104 previously mixed within bypass gas 44 via first dispersion component 102A.

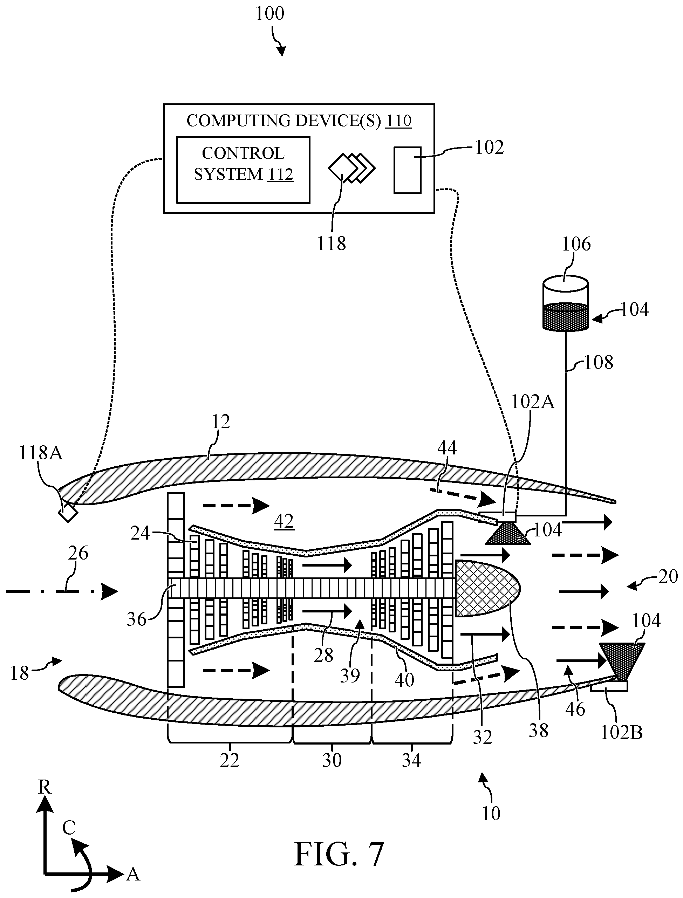

In the exemplary embodiment shown in FIG. 7, first dispersion component 102A is coupled to, positioned on, and/or affixed to internal housing 40 of engine 10, adjacent to nozzle 38, as similarly shown and discussed herein with respect to FIG. 4. Additionally, second dispersion component 102B is coupled to, positioned on, and/or affixed to external shell 12 of aircraft engine 10, directly adjacent to outlet 20 of aircraft engine 10. As shown in the exemplary embodiment, second dispersion component 102B is also positioned on external shell 12 downstream from first dispersion component 102A. As shown in the exemplary embodiment, first dispersion component 102A is positioned within aircraft engine 10 to mix sprayed ice nuclei particles 104 with combustion gases 32, while second dispersion component 102B is positioned to mix sprayed ice nuclei particles 104 with exhaust gas 46, formed from bypass gas 44, combustion gases 32, and possibly ice nuclei particles 104 previously mixed within combustion gases 32 via first dispersion component 102A.

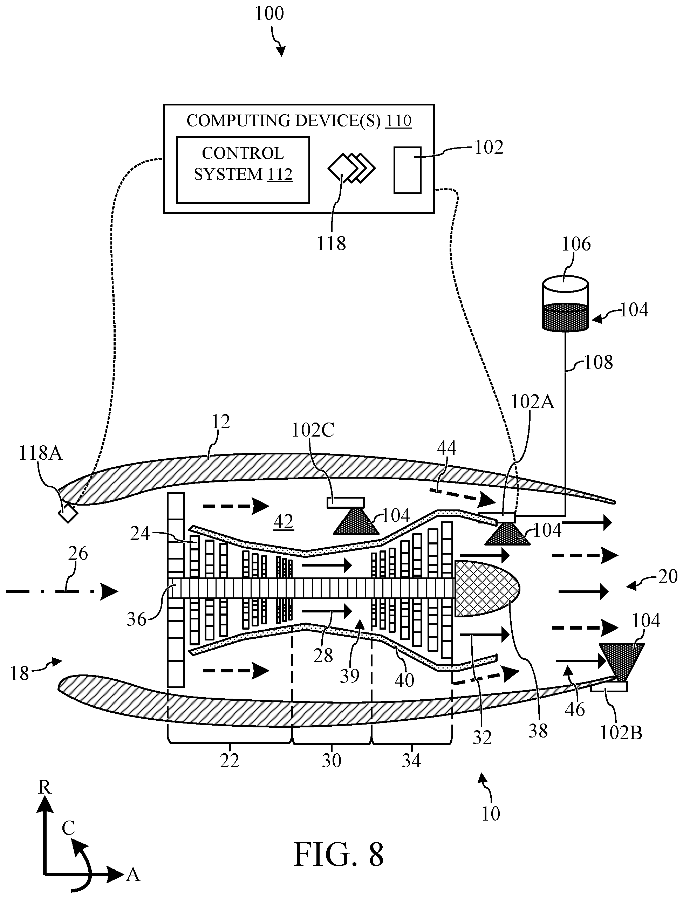

System 100 shown in FIG. 8 includes first dispersion component 102A and second dispersion component 102B, as similarly shown and discussed herein with respect to FIG. 7. Additionally, system 100 includes a third dispersion component 102C coupled to, affixed within, and/or positioned between internal housing 40 and external shell 12 of aircraft engine 10, as similarly discussed herein with respect to FIG. 3. As shown in the exemplary embodiment, first dispersion component 102A is positioned within aircraft engine 10 to mix sprayed ice nuclei particles 104 with combustion gases 32, while second dispersion component 102B is positioned to mix sprayed ice nuclei particles 104 with exhaust gas 46, formed from bypass gas 44, combustion gases 32, and possibly ice nuclei particles 104 previously mixed within combustion gases 32 via first dispersion component 102A. Additionally, third dispersion component 102C is positioned to mix ice nuclei particles 104 with bypass gas 44 flowing through bypass gas path 42, prior to bypass gas 44 mixing with combustion gases 32 to form exhaust gas 46.

It is understood that the number of dispersion components 102 included within system 100 is exemplary and non-limiting. As such, it is understood that system 100 can include any number of dispersion components 102 positioned within and/or adjacent to each aircraft engine 10 utilizing system 100 to mitigate contrails during operation. Additionally, it is to be understood that the position of dispersion component(s) 102 within aircraft engine 10, as shown in FIGS. 1 and 3-8, are also exemplary and non-limiting. As a result, dispersion component(s) 102 can be positioned anywhere within engine 10 to spray ice nuclei particles 104 and ultimately mitigate the formation of contrails during operation, as discussed herein.

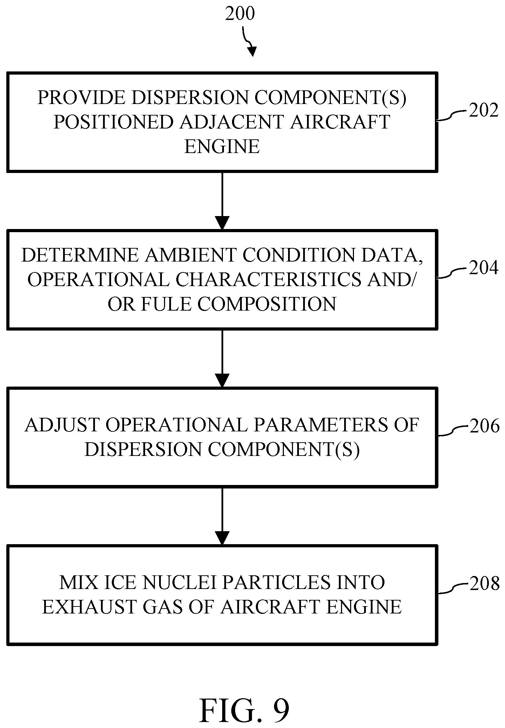

FIG. 9 is a flow chart showing processes 200 for mitigating contrails formed by aircraft engines. More specifically, processes 200 include mitigating contrails formed by aircraft engines using ice nuclei particles mixed with exhaust gases generated by the aircraft engines. It is understood that similarly named components may function in a substantially similar fashion. Redundant explanation of these components has been omitted for brevity.

In process 202, at least one dispersion component of a system is provided and/or positioned adjacent to the aircraft engine. The at least one dispersion component is positioned adjacent to, positioned within, and/or coupled to the aircraft engine and/or various portions (e.g., external shell, internal housing) of the same. For example, the at least one dispersion component is positioned adjacent to a nozzle of the aircraft engine, positioned between an internal housing and an external shell of the aircraft engine, or coupled to the external shell, adjacent to an outlet of the aircraft engine. The at least one dispersion component of the system is configured to release ice nuclei particles during operation. In exemplary embodiments, the ice nuclei particles include at least one of silver iodide (AgI), bismuth triiodide (BiI₃), mineral dust, or ice-active proteins.

In process 204, various data, characteristics, and/or information relating to the aircraft engine are determined. More specifically, in process 204, ambient condition data relating to the aircraft engine, operational characteristics for the aircraft engine, and a fuel composition for a fuel utilized by the aircraft engine are determined, identified, and/or obtained. In non-limiting examples, the ambient condition data includes at least one of an ambient temperature, an ambient pressure, an ambient humidity, or an altitude of the aircraft engine. Additionally, the operational characteristics for the aircraft engine include at least one of an operational power setting and/or a combustion mode of the aircraft engine, a temperature of the exhaust gas, a consumption rate of fuel, a flow rate of the exhaust gas, or a pressure of the exhaust gas. The determined composition of the fuel is dependent, at least in part, on the type of fuel used in the aircraft engine and/or the type of engine forming the aircraft engine. In exemplary embodiments, the system can also include at least one sensor positioned on and/or proximate to the aircraft engine to facilitate the determination in process 204. Utilizing sensor(s), the determination in process 204 can also include sensing at least one of the ambient condition data relating to the aircraft engine, or the operational characteristics for the aircraft engine.

In process 206, operational parameters of the at least one dispersion component are adjusted. More specifically, and based on the determined ambient condition data relating to the aircraft engine, operational characteristics for the aircraft engine, and a fuel composition for a fuel utilized by the aircraft engine, operational parameters of the at least one dispersion component are adjusted, changed, and/or modified. In exemplary embodiments, the adjusting of the operational parameters of the dispersion component includes altering an amount and/or a flow rate of the ice nuclei particles released from the dispersion component during operation.

In process 208, the ice nuclei particles are mixed into an exhaust gas of the aircraft engine. More specifically, ice nuclei particles dispersed, discharged, and/or sprayed by the at least one dispersion component are mixed with the exhaust gas generated by the aircraft engine. Depending on the position of the dispersion component within the aircraft engine, the mixing of the ice nuclei particles can further include injecting the ice nuclei particles into at least one of: a portion of the exhaust gas, a bypass gas path formed separate from and surrounding a compressor section and the turbine section of the aircraft engine, the bypass gas path receiving a bypass gas forming at least a distinct portion of the exhaust gas, or directly into the exhaust gas downstream of the combustion gas path and the bypass gas path, respectively. In exemplary embodiments, the exhaust gas is formed from a mixture of the combustion gas and the bypass gas. Additionally, the mixing of the ice nuclei particles into the exhaust gas in process 208 further includes consuming and/or absorbing water vapor found in the exhaust gas. Consuming or absorbing the water vapor and eventually falling and evaporating, the ice nuclei particles prevent particles of the exhaust gas from activating into water droplets, freezing, and ultimately creating the undesirable blanket effect associated with contrails generated by aircraft engines, as discussed herein.

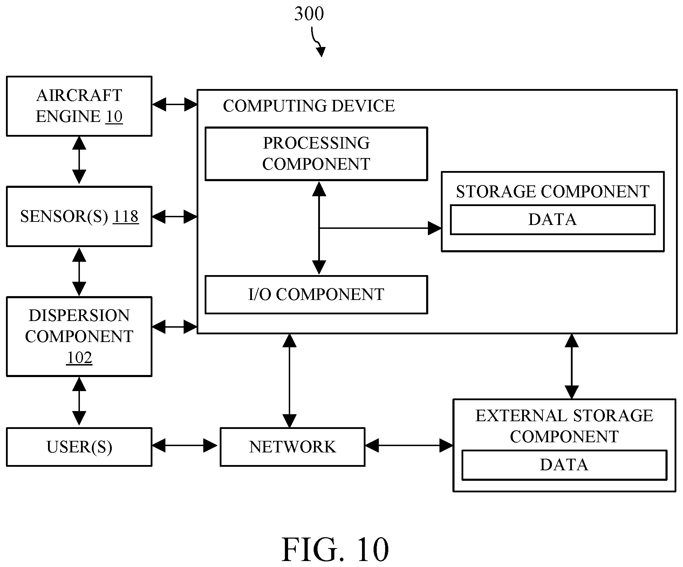

FIG. 10 shows a schematic view of a computing environment or system 300 (hereafter, "computing system 300"), and the various components included within computing system 300. In the non-limiting example shown in FIG. 10, computing system 300 may include at least one computing device that may be configured to mitigate the formation of contrails during the operation of aircraft engines 10 by performing the processes 200 discussed herein with respect to FIG. 9. Additionally, in exemplary embodiments, the computing device shown in FIG. 10 can be substantially similar to computing device(s) 110 and/or control system 112 discussed herein with respect to FIG. 1. It is understood that similarly numbered and/or named components may function in a substantially similar fashion. Redundant explanation of these components has been omitted for brevity.

It is understood that computing device(s) may be implemented as a computer program product stored on a computer-readable storage medium. The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network, and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out operations of the present invention may be assembler instructions, instruction-set-architecture (ISA) instructions, machine instructions, machine-dependent instructions, microcode, firmware instructions, state-setting data, or either source code or object code written in any combination of one or more programming languages, including an object-oriented programming language such as Java, Python, Smalltalk, C++, or the like, and conventional procedural programming languages, such as the "C" or "FORTRAN" programming languages or similar programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, single-board microcontroller, programmable logic circuitry, field-programmable gate arrays (FPGA), advanced RISC machines (ARM), or programmable logic arrays (PLA) may execute the computer-readable program instructions by utilizing state information of the computer-readable program instructions to personalize the electronic circuitry, in order to perform aspects of the present invention.

Aspects of the present invention are described herein with reference to flowchart illustrations and/or block diagrams of methods, apparatus (systems), and/or computer program products according to embodiments of the invention. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special-purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

Computing system 300 shown in FIG. 10 may include any type of computing device(s) and, for example, includes at least one processor or processing component(s), a storage component, input/output (I/O) component(s) (including a keyboard, touchscreen, or monitor display), and a communications pathway. In general, processing component(s) execute program code that is at least partially fixed or stored in the storage component. While executing program code, processing component(s) can process data, which can result in reading and/or writing transformed data from/to the storage component and/or I/O component(s) for further processing. The pathway provides a communications link between each of the components in the computing device(s). An I/O component can comprise one or more human I/O devices, which enables a user to interact with the computing device(s) to operate, control, and/or interact with dispersion component 102, and/or sensor(s) 118, as discussed herein. Computing device(s) may also be implemented in a distributed manner such that different components reside in different physical locations.

The storage component may also include modules, data, and/or electronic information relating to various other aspects of computing system 300. Specifically, operational modules, electronic information, and/or data relating to the aircraft engine 10 (e.g., ambient condition data relating to the aircraft engine, operational characteristics for the aircraft engine, a fuel composition for a fuel utilized by the aircraft engine, etc.). The operational modules, information, and/or data may include the required information and/or may allow computing system 300, and specifically the computing device, to perform the processes discussed herein for mitigating contrail formations using ice nuclei particles.

Computing system 300, and specifically the computing device of computing system 300, may also be in communication with an external storage component. The external storage component may be configured to store various modules, data, and/or electronic information relating to various other aspects of computing system 300, similar to the storage component of the computing device(s). Additionally, the external storage component may be configured to share (e.g., send and receive) data and/or electronic information with the computing device(s) of computing system 300. In the non-limiting example shown in FIG. 10, the external storage component may include any or all of the operational modules and/or data shown to be stored on the storage component. Additionally, the external storage component may also include a secondary database that a user may interact with, provide information/data to, and/or may include information/data relating to a poster. In a non-limiting example, the external storage component may be a cloud-based storage component or system. In other non-limiting examples, the external storage component may also include and/or be in communication with a neural network to aid in computation and/or data processing as discussed herein.

In a non-limiting example shown in FIG. 10, computing device(s) may be in communication with and/or may be configured to share (e.g., send and receive) data and/or electronic information over a network. A network may represent a closed network, such as a local area network (LAN), or may include the Internet. A network may also include a secondary database including similar data as a storage component, and/or may include or be in communication with a neural network to aid in computation and/or data processing as discussed herein.

Furthermore, it is understood that computing device(s) of computing system 300 or relevant components thereof (such as an API component, agents, etc.) may also be automatically or semi-automatically deployed into a computer system by sending the components to a central server or a group of central servers. The components are then downloaded into a target computer that will execute the components. The components are then either detached to a directory or loaded into a directory that executes a program that detaches the components into a directory. Another alternative is to send the components directly to a directory on a client computer's hard drive. When there are proxy servers, the process will select the proxy server code, determine on which computers to place the proxy servers' code, transmit the proxy server code, and then install the proxy server code on the proxy computer. The components will be transmitted to the proxy server and then will be stored on the proxy server.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special-purpose hardware-based systems that perform the specified functions or acts, or combinations of special-purpose hardware and computer instructions.

As discussed herein, various systems and components are described as "obtaining" and/or "determining" data (e.g., determine ambient condition data relating to the aircraft engine, determine operational characteristics for the aircraft engine, determine a fuel composition for a fuel utilized by the aircraft engine, etc.). It is understood that the corresponding data can be obtained and/or determined using any solution. For example, the corresponding system/component can generate and/or be used to generate the data, retrieve the data from one or more data stores (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

The foregoing drawings show some of the processing associated with several embodiments of this disclosure. In this regard, each drawing or block within a flow diagram of the drawings represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" and/or "substantially" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A system for mitigating contrails formed by an aircraft engine, the system comprising:
at least one dispersion component positioned adjacent to the aircraft engine, the at least one dispersion component configured to release ice nuclei particles;
at least one memory storing instructions; and
at least one processor communicatively coupled to the at least one dispersion component and the at least one memory, the at least one processor configured to execute the instructions to:
determine:
ambient condition data relating to the aircraft engine;
operational characteristics for the aircraft engine; and
a fuel composition for a fuel utilized by the aircraft engine;
adjust operational parameters of the at least one dispersion component to alter an amount of the ice nuclei particles released therefrom; and
mix the ice nuclei particles into an exhaust gas of the aircraft engine.

2. The system of claim 1, wherein:
the ambient condition data includes at least one of:
an ambient temperature,
an ambient pressure,
an ambient humidity, or
an altitude of the aircraft engine; and
the operational characteristics for the aircraft engine include at least one of:
an operational power setting of the aircraft engine,
a temperature of the exhaust gas,
a consumption rate of fuel,
a flow rate of the exhaust gas, or
a pressure of the exhaust gas.

3. The system of claim 1, wherein the ice nuclei particles include at least one of silver iodide (AgI) or bismuth triiodide (BiI₃), mineral dust, or ice-active proteins.

4. The system of claim 1, wherein the at least one processor is further configured to execute the instructions when mixing the ice nuclei particles into the exhaust gas to:
inject the ice nuclei particles into at least one of:
a combustion gas path formed directly downstream of a last stage of a turbine section of the aircraft engine, the combustion gas path receiving a combustion gas forming at least a portion of the exhaust gas,
a bypass gas path formed separated from and surrounding a compressor section and the turbine section of the aircraft engine, the bypass gas path receiving a bypass gas forming at least a distinct portion of the exhaust gas, or
directly into the exhaust gas downstream of the combustion gas path and the bypass gas path, respectively,
wherein the exhaust gas is formed from a mixture of the combustion gas and the bypass gas.

5. The system of claim 1, wherein the at least one processor is further configured to execute the instructions when mixing the ice nuclei particles into the exhaust gas to:
absorb water vapor in the exhaust gas.

6. The system of claim 1, wherein the at least one dispersion component is:
positioned adjacent a nozzle of the aircraft engine,
positioned between an internal housing and an external shell of the aircraft engine, or
coupled to the external shell, adjacent an outlet of the aircraft engine.

7. The system of claim 1, wherein the at least one dispersion component includes a plurality of dispersion components.

8. The system of claim 1, further comprising at least one sensor formed adjacent to the aircraft engine to sense at least one of the ambient condition data relating to the aircraft engine, or the operational characteristics for the aircraft engine.

9. A method for mitigating contrails formed by an aircraft engine, the method comprising:
providing at least one dispersion component positioned adjacent to the aircraft engine, the at least one dispersion component configured to release ice nuclei particles;
determining:
ambient condition data relating to the aircraft engine;
operational characteristics for the aircraft engine; and
a fuel composition for a fuel utilized by the aircraft engine;
adjusting operational parameters of the at least one dispersion component to alter an amount of the ice nuclei particles released therefrom; and
mixing the ice nuclei particles into an exhaust gas of the aircraft engine.

10. The method of claim 9, wherein:
the ambient condition data includes at least one of:
an ambient temperature,
an ambient pressure,
an ambient humidity, or
an altitude of the aircraft engine; and
the operational characteristics for the aircraft engine include at least one of:
an operational power setting of the aircraft engine,
a temperature of the exhaust gas,
a consumption rate of fuel,
a flow rate of the exhaust gas, or
a pressure of the exhaust gas.

11. The method of claim 9, wherein the ice nuclei particles include at least one of silver iodide (AgI) or bismuth triiodide (BiI₃), mineral dust, or ice-active proteins.

12. The method of claim 9, wherein the mixing of the ice nuclei particles into the exhaust gas further includes injecting the ice nuclei particles into at least one of:
a combustion gas path formed directly downstream of a last stage of a turbine section of the aircraft engine, the combustion gas path receiving a combustion gas forming at least a portion of the exhaust gas,
a bypass gas path formed separated from and surrounding a compressor section and the turbine section of the aircraft engine, the bypass gas path receiving a bypass gas forming at least a distinct portion of the exhaust gas, or
directly into the exhaust gas downstream of the combustion gas path and the bypass gas path, respectively,
wherein the exhaust gas is formed from a mixture of the combustion gas and the bypass gas.

13. The method of claim 9, wherein the mixing of the ice nuclei particles into the exhaust gas further includes absorbing water vapor in the exhaust gas.

14. The method of claim 9, wherein the at least one dispersion component is:
positioned adjacent a nozzle of the aircraft engine,
positioned between an internal housing and an external shell of the aircraft engine, or
coupled to the external shell, adjacent an outlet of the aircraft engine.

15. The method of claim 9, wherein the at least one dispersion component includes a plurality of dispersion components.
